# EUROPÄISCHE PATENTSCHRIFT

(11) **EP 0 299 316 B1**
(45) Veröffentlichungstag und Bekanntmachung des Hinweises auf die Patenterteilung: **13.10.1993**
(21) Anmeldenummer: 88110625.6
(22) Anmeldetag: 04.07.1988
(51) Int. Cl.: G11B 23/113, G11B 23/40, G11B 33/10

(54) **Prüfeinrichtung für Magnetband-Cassetten**
Test device for magnetic tape cassettes
Dispositif de contrôle pour cassettes à bande magnétique

(30) Priorität: 16.07.1987 DE 3723473; 16.03.1988 DE 3808744
(43) Veröffentlichungstag der Anmeldung: 18.01.1989
(73) Patentinhaber: BASF Magnetics GmbH, 68165 Mannheim (DE)
(72) Erfinder: Wagner, Bernd, Dipl.-Ing., D-8000 München 90 (DE); Frank, Erwin, Dipl.-Ing., D-8303 Rottenburg (DE)
(74) Vertreter: Münch, Volker, Dr.

(56) Entgegenhaltungen:
- EP-A- 0 157 201
- DE-A- 1 944 449
- DE-A- 3 234 444
- FR-A- 2 438 892
- FR-A- 2 508 170
- PATENT ABSTRACTS OF JAPAN vol. 9, no. 33 (P-334)(1756) 13 Februar 1985, & JP-A-59 175078
- FEINWERKTECHNIK & MESSETECHNIK vol. 93, no. 7, Oktober 1985, MUNCHEN, DE Seiten 369 - 371; R. H. DOLLWETZEL: "EIGENSCHAFTEN UND ANWENDUNGEN VON REFLEXLICHTSCHRANKEN"

## Beschreibung

Die Erfindung betrifft eine Selbsttätig ablaufende Vorrichtung zur Prüfung auf richtige Position der Etiketten und auf Vorhandensein des Bandwickels bei der Montage von Magnetband-Cassetten, bestehend aus Cassetten-Oberteil und -Unterteil, einem im Innenraum von einer Wickelnabe zur anderen auf- und abwickelbaren Magnetband, wobei die Wickel durch ein im Cassettenober- und -unterteil vorgesehenes transparentes Fenster beobachtbar sind, wobei die Cassetten auf mindestens einer ihrer Außenseiten ein Feld zur Aufnahme eines Etiketts enthalten und wobei die Prüfvorrichtung Fotosensoren enthält, welche sämtlich mit gepulstem Infrarot-Licht betrieben werden.

Magnetband-Cassetten, beispielsweise Audio-Compact-Cassetten, bestehen im wesentlichen aus einem Cassettenunterteil, einem Oberteil und einem im geschlossenen Innenraum von einer Wickelnabe zu einer zweiten auf- und abwickelbaren Magnetband. Zur Beobachtung des Wickelzustandes enthalten die beiden meistens opak ausgeführten Cassettenteile in der Mitte ein transparentes rechteckiges Fenster. Unterhalb oder oberhalb dieses Sichtfensters ist vorzugsweise in einem vertieften Feld auf jedem der beiden Cassettenteile ein Etikett aufgeklebt. Bei der heutzutage meist vollautomatischen Montage der Compact-Cassetten kann es vorkommen, daß sich kein Bandwickel in der Cassette befindet oder daß das Etikett fehlt oder nicht richtig im dafür vorgesehenen Feld sitzt. Im letzteren Fall kann dies dazu führen, daß die Cassette beim Abspielen im Recorder klemmt und sich nicht mehr dem Recorder entnehmen läßt.

Prüfvorrichtungen der oben genannten gattungsmäßigen Art sind bekannt. Die JP 59-017 078 beschreibt eine automatisch arbeitende Einrichtung, bei der die korrekte Position des Etiketts mittels eines Durchlichtsensors, eines Stroboskops und einer Fernsehkamera überprüft wird und bei der fehlerhafte Cassetten ausgeworfen werden.

Aus der FR 2 438 892 ist bekannt, das Vorhandensein des Bandwickels bei einer Magnetband-Cassette mittels einer Durchlichtschranke zu detektieren. In dem Artikel "Eigenschaften und Anwendungen von Reflexlichtschranken" (Zeitschrift für Feinwerktechnik und Meßtechnik, 1985) werden mit Infrarotlicht betriebene spaltförmige Detektoren zum Abtasten von Gegenständen vorgeschlagen. In der DE-OS 19 44 449 ist eine Vorrichtung zum Anzeigen von Etikettierungen an Behältern beschrieben, bei welcher der Behälter beidseitig mittels einer elektrischen Brücke, einem Fotozellenpaar sowie einem Asymmetrierdetektor abgetastet wird, wobei als fehlerhaft erkannte Behälter ausgeworfen werden. Die EP 0 157 201 beschreibt einen Detektor für ein aus transparentem Material bestehendes Band, wobei gepulstes Licht zur Detektion in einer Lichtschranke verwendet wird.

Visuelle Kontrollen auf Vorhandensein der oben genannten Fehler sind bei Massenprodukten personalintensiv und daher teuer, deswegen bestand die Aufgabe, eine Prüfeinrichtung für derartige Cassettenfehler zu schaffen, die
- in der Konfektionierungsstraße integral enthalten ist
- auf Vorhandensein der vorgenannten Cassettenfehler berührungs- und zerstörungsfrei prüft
- selbsttätig nur fehlerfreie Cassetten zur Weiterverarbeitung freigibt und fehlerhafte Cassetten ausstößt
- Störungen der Prüfeinrichtung selbsttätig meldet und
- unabhängig vom Raumlicht arbeitet.

Erfindungsgemäß wurde die Aufgabe mit einer Prüfeinrichtung mit den im kennzeichnenden Teil der unabhängigen Ansprüche aufgeführten Merkmalen gelöst. Nähere Einzelheiten der Erfindung gehen aus den Zeichnungen und der Beschreibung hervor.

Die Erfindung wird nun anhand der Zeichnungen näher geschildert und zwar stellen dar
- Figur 1: eine Schemazeichnung einer ersten erfindungsgemäßen Prüfeinrichtung
- Figur 2: Querschnitte der Beleuchtungs- und Detektoreinrichtung gemäß der ersten erfindungsgemäßen Prüfeinrichtung
- Figuren 3 - 4: Schemazeichnungen zweier Positionen einer zu prüfenden Cassette in einer zweiten erfindungsgemäßen Prüfeinrichtung.

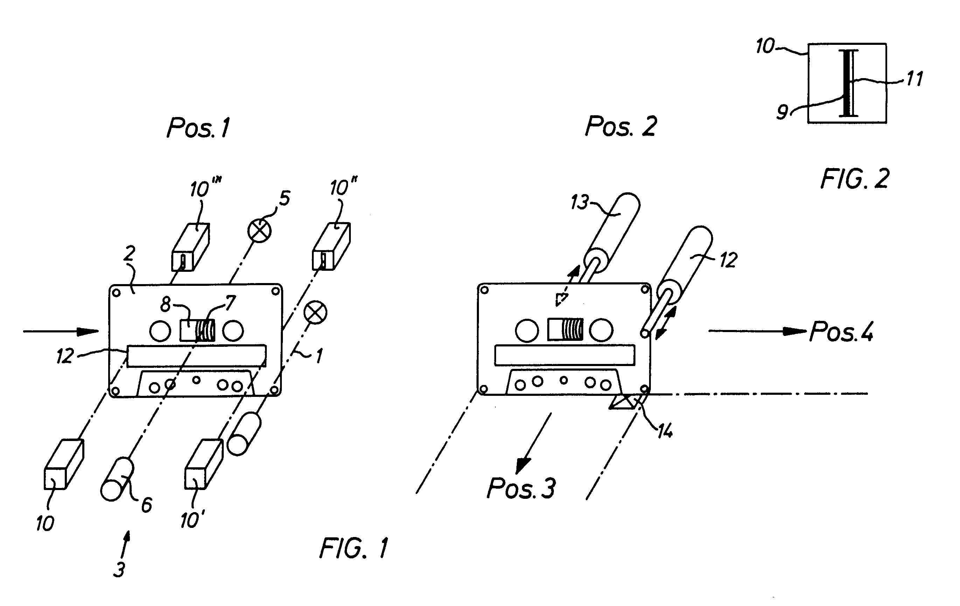

Wie aus Figur 1 zu sehen, wird die in Pfeilrichtung ankommende fertig montierte und etikettierte Magnetbandcassette (2) in der Position 1 in der Prüfeinrichtung (3) durch einen Durchlichtsensor (1) erkannt und durch (nicht gezeichnete) mechanische Mittel in dieser Lage fixiert. Eine Beleuchtungseinrichtung (5) bestrahlt das transparente Sichtfenster (8) der Magnetband-Cassette und die dahinterliegende Fotozelle (6) registriert bei richtiger Lage des Bandwickels (7) kein Licht. Bei Nichtvorhandensein des Wickels (7) beziehungsweise wenn sich der Wickel auf der falschen Seite (8) der Cassette befindet, gibt die Fotozelle (6) eine entsprechende Meldung. Die Beleuchtung und die Abfrage des Lichtes kann auch über aus Glasfasern bestehende Lichtleiter geschehen. Die Beleuchtung kann durch Infrarotlicht erfolgen.

Gleichzeitig mit diesem Prüfvorgang werden Lichtleiter (10, 10' , 10'', 10''') auf die Kanten des Etiketts (12) gerichtet, wobei auf jeder Seite der Magnetband-Cassette mindestens zwei Kanten abgetastet werden. Jeder Lichtleiter enthält wie in Figur 2 in Querschnitt dargestellt, zwei schmale parallele Spalte (9, 11). Der Spalt (9) bestrahlt eine Kante des Etiketts vorzugsweise mit Infrarotlicht und der benachbarte Spalt (11) registriert das remittierte Licht und leitet es zu einer (nicht gezeichneten) Fotozelle weiter. Wird eine vorgegebene Lichtmenge um beispielsweise 50 % über- beziehungsweise unterschritten, so gibt die Fotozelle über eine entsprechende Schaltung Meldung. Diese Registrierungsart bedingt, daß bei einer bestimmten Spaltbreite, beispielsweise 0,4 mm, bereits eine Etikettverschiebung von 0,2 mm eine Meldung hervorruft.

Das Infrarotlicht kann gepulst sein, beispielsweise mit 1 kHz. Entsprechende fertige Bauteile, die Infrarotlicht aussenden, durch Lichtleiter leiten und registrieren, sind auf dem Markt erhältlich. Um seitliche Verschiebungen wie auch Höhenverschiebungen des Etiketts zu registrieren, kann es zweckmäßig sein, je einen Lichtleiter auf eine vertikale und einen zweiten auf eine horizontale Kante des Etiketts zu richten. Diese Art der Kantenprüfung setzt natürlich voraus, daß ein Unterschied im Reflektions- beziehungsweise Remissionsverhalten zwischen Etikett und benachbartem Cassettenmaterial besteht. Dies kann beispielsweise dadurch gewährleistet werden, indem das Etikett stark reflektiert, durch Einbau streuender Teilchen Licht remittiert oder durch Zusatz fluoreszierender Stoffe für genügend Lichtausbeute sorgt.

Nach Durchführung dieser Prüfungen wird die Magnetband-Cassette in Position 2 taktmäßig weiterbefördert. Haben alle Fotozellen als Ergebnis einen Gutbefund ergeben, so sperrt ein pneumatisch oder elektrisch betätigbarer Zylinder (12) den Weitertransport in Laufrichtung und die Magnetband-Cassette wird über einen weiteren Zylinder (13) quer zur Laufrichtung in Position 3 und damit zur Weiterverarbeitung freigegeben, beispielsweise zur Magazinierung oder Verpackung. War dagegen ein Fehler registriert worden, so bleiben die Zylinder (12, 13) unbetätigt und die Magnetband-Cassette wird in Position 4 weiter befördert und damit als fehlerhaft ausgeworfen. Sie kann dann je nach Art des Fehlers vernichtet oder nachgebessert werden. Eine nicht näher dargestellte Detektoreinrichtung (14) registriert, wann die Magnetband-Cassette die Position 2 verlassen hat und gibt daraufhin eine weitere bereits in Position 1 geprüfte Cassette zum Weitertransport in die Position 2 frei, wobei sich der eben dargestellte Vorgang wiederholt.

Durch die Betätigung der Prüfeinrichtung mit gepulstem Infrarotlicht wird eine eventuelle Störung durch Raumlicht ausgeschaltet; weiterhin ist durch diese Prüfvorrichtung gesichert, daß bei Ausfall auch nur einer der Detektoreinrichtungen sofort eine Meldung erfolgt, so daß sich die erfindungsgemäße Prüfeinrichtung auch selbst kontrolliert.

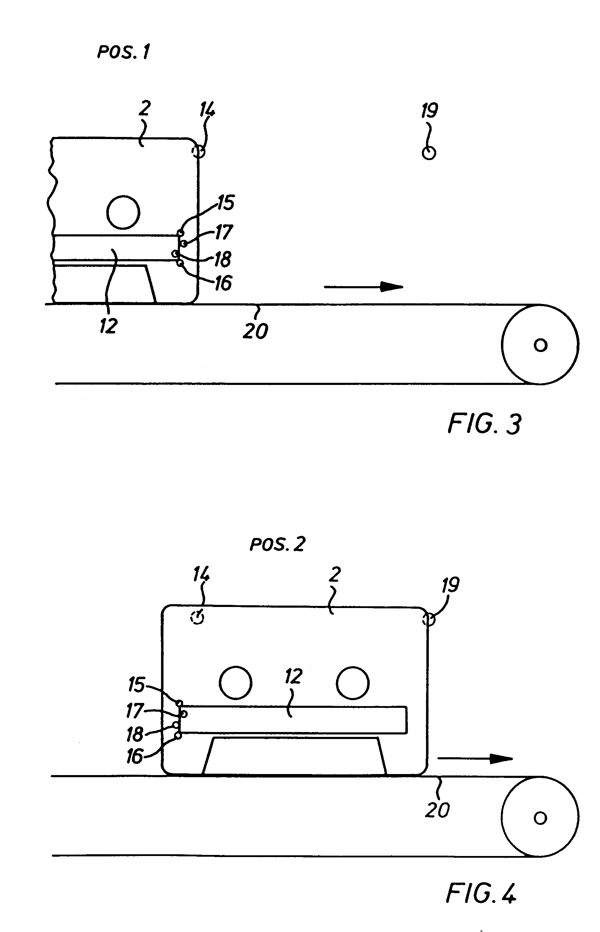

Bei einer Prüfeinrichtung dieser Art wird die Cassettenlaufzeit durch das notwendige Anhalten der Cassette begrenzt. Eine kürzere Durchlaufzeit wird durch eine zweite Anordnung gemäß den Figuren 3 und 4 gezeigt, in denen schematisch zwei Positionen der zu prüfenden Cassette in einer anderen Ausführungsform der erfindungsgemäßen Prüfeinrichtung dargestellt sind.

Bei Passieren der vertikalen Kante einer ankommenden Cassette (2) an dem ersten Durchlichtsensor (14) (Position 1 - Figur 3) aktiviert die Lichtschranke die Reflexsensoren (15, 16, 17, 18), wie weiter unten näher beschrieben. Bei Erreichen der Position 1 befinden sich die ersten Reflexsensoren (15, 16), welche im Abstand der Höhe des Etiketts (12) vertikal übereinander angeordnet sind, gerade an den Ecken des Etiketts, welche eine Schmalseite begrenzen und zwar vorzugsweise so, daß sie gerade außerhalb des Etikettbereichs liegen. Zwei weitere Reflexsensoren (17, 18) auf der gleichen Cassettenseite sind zwischen diesen Lichtschranken (15, 16) angeordnet und zwar horizontal gegeneinander um einen geringfügigen Abstand gegeneinander versetzt, der etwa dem Durchmesser eines Sensors entspricht. Vier weitere spiegelbildlich angeordnete Reflexsensoren (nicht gezeichnet) befinden sich auf der anderen Cassettenseite und tasten das dort angebrachte Etikett ab. Der Abstand des ersten Durchlichtsensors (14) von den weiteren Reflexsensoren (17, 18) ist so bemessen, daß bei korrekter Position des Etiketts gerade zwischen den weiteren Reflexsensoren (17, 18) die vertikale Kante des Etiketts verläuft.

Sobald die vertikale Kante der Cassette den zweiten Durchlichtsensor (19) erreicht (Position 2 - Figur 4), so tasten die Reflexsensoren (15 - 18) den Bereich der anderen Schmalseite des Etiketts ab. Dazu beträgt der Abstand des ersten (14) von dem zweiten (19) Durchlichtsensor gerade eine Etikettenlänge. In diesem Fall befindet sich bei korrekter Position des Etiketts die andere Schmalseite gerade wieder zwischen den weiteren Reflexionssensoren (17, 18).

Die Wirkungsweise dieser zweiten Prüfeinrichtung ist wie folgt:
Eine Cassette (2) wird auf einem Transportband (20) oder auf Rollen durch die Prüfeinrichtung geführt, wobei auch (nicht gezeichnete) seitliche Führungselemente vorgesehen sind. Bei Erreichen des ersten Durchlichtsensors (14) aktiviert dieser kurzzeitig die weiteren Reflexsensoren (17, 18), welche feststellen, ob sich die Schmalseite des Etiketts in der richtigen Position befindet. Außerdem werden die ersten Reflexionssensoren (15, 16) aktiviert, die beide gerade außerhalb des Etikettenfeldes angeordnet sind. Beim weiteren Durchlauf der Cassette dürfen die ersten Reflexsensoren (15, 16) kein Etikett erkennen, falls dieses nicht schief sitzt. Bei Erreichen des zweiten Durchlichtsensors (19) aktiviert dieser abermals kurzzeitig die weiteren Reflexsensoren (17, 18) und diese stellen den korrekten Sitz der anderen Schmalseite des Etiketts fest. Die spiegelbildlich angeordneten Reflexsensoren (15' - 18') (nicht gezeichnet) fragen entsprechend das auf der anderen Seite angebrachte Etikett ab. Die von den Reflexsensoren kommenden Signale werden in einer Auswertelogik verarbeitet und steuern den weiteren Cassettenlauf derart, daß bei Gutbefund die Cassette einer Verpackungseinrichtung zugeführt und bei Negativmeldung gestoppt und ausgeschoben wird.

### Ausführungsbeispiel

Die Transportgeschwindigkeit des Bandes beträgt 21 m/min, in dieser Zeit werden 110 Cassetten in der erfindungsgemäßen Einrichtung geprüft. Die Abfragedauer der Elektronik beträgt 1 ms. Als Durchlichtsensoren werden Glasfaserkabel, Type E32-TC200A der Firma Omron verwendet, als Reflexsensoren Glasfaserkabel des Typs E32-DC200F. Die Glasfaserkabel haben einen Faserdurchmesser von 0,5 mm und beinhalten zwei Faserseelen mit je 0,2 mm Durchmesser. Die eine Faser transportiert ankommendes gepulstes Infrarotlicht mit 1 kHz, während die parallel liegende Faser das remittierte Licht zu einer Fotozelle und zu der mit dieser verbundenen Auswertelogik (nicht gezeichnet) führt. Dieses System ergibt eine Abfragegenauigkeit der Etikettenposition von etwa 0,3 mm. Durch die Verwendung gepulsten IR-Lichts ist die erfindungsgemäße Prüfeinrichtung frei von Raumlichteinflüssen.

## Patentansprüche

1. Selbsttätig ablaufende Vorrichtung zur Prüfung auf richtige Position der Etiketten und auf Vorhandensein des Bandwickels bei der Montage von Magnetband-Cassetten, bestehend aus Cassetten-Oberteil und -Unterteil, einem im Innenraum von einer Wickelnabe zur anderen auf- und abwickelbaren Magnetband, wobei die Wickel durch ein im Cassettenober- und -unterteil vorgesehenes transparentes Fenster beobachtbar sind, wobei die Cassetten auf mindestens einer ihrer Außenseiten ein Feld zur Aufnahme eines Etiketts enthalten und wobei die Prüfvorrichtung Fotosensoren enthält, welche sämtlich mit gepulstem Infrarot-Licht betrieben werden, gekennzeichnet durch
- einen Durchlichtsensor (1) in einer ersten Position zum Anhalten und Fixieren der aus der Montagestrecke kommenden Magnetband-Cassette (2) in der Prüfeinrichtung (3)
- mindestens zwei Reflexsensoren (10, 10' , 10'' , 10''') , welche gegenüber jeder mit einem Etikett versehen Cassettenseite angeordnet sind, bestehend aus einem Lichtleiter mit zwei parallelen schmalen Spalten (9, 11), welche parallel zu mindestens einer Etikett-Kante ausgerichtet sind zur optischen Prüfung der Lage des Etiketts (12) bei gleichzeitiger Prüfung in Durchlichtmessung (5, 6) auf Vorhandensein des Bandwickels (7)
- eine Bewertungslogik zur Prüfung der vorgegebenen Lichtmenge für jeden Sensor und zum nachfolgenden Transport der Cassette in eine zweite Position
- zwei durch die Bewertungslogik betätigbare Zylinder (12, 13) in der zweiten Position der Cassette (2) zu deren Transport bei Betätigung beider Zylinder in eine dritte Position senkrecht zur bisherigen Laufrichtung und bei Nichtbetätigung beider Zylinder in eine vierte Position in Laufrichtung der Cassette
- eine Detektoreinrichtung (14) in der zweiten Position zum Transport einer nachfolgenden Cassette aus der ersten in die zweite Position, sobald die erste Cassette die zweite Position verlassen hat.

2. Vorrichtung nach Anspruch 1, dadurch gekennzeichnet, daß einer der Fotosensoren (10) parallel zu einer der Kanten des Etiketts (12) und daß der andere Sensor (10') parallel zu einer dazu senkrechten Kante ausrichtbar ist.

3. Selbsttätig ablaufende Vorrichtung zum Prüfen auf richtige Position der Etiketten bei der Montage von Magnetband-Cassetten, bestehend aus Cassettenoberteil und -unterteil, wobei die Cassetten auf mindestens einer ihrer Außenseiten ein Feld zur Aufnahme eines Etiketts enthalten und wobei die Prüfvorrichtung Fotosensoren enthält, welche sämtlich mit gepulstem Infrarot-Licht betrieben werden und wobei die Cassette kontinuierlich auf einem Laufband durch die Prüfvorrichtung beförderbar ist, gekennzeichnet durch
- einen ersten (14) sowie einen zweiten (19) Durchlichtsensor, deren horizontaler Abstand gleich der Länge des Etiketts (12) ist zur Abtastung einer Schmalseite der Cassette (2)
- vier in Höhe des Etikettenfeldes angeordnete Reflexsensoren (15, 16, 17, 18), von denen zwei erste Reflexsensoren (15, 16) vertikal übereinander im ungefähren Abstand der Etikettenhöhe gerade außerhalb des Etikettenfeldes angeordnet und zwei weitere Reflexsensoren (17, 18) zwischen den ersten Reflexsensoren (15, 16) in einem geringfügigen horizontalen Abstand voneinander angeordnet sind, wobei der horizontale Abstand des ersten Durchlichtsensors (14) von der geometrischen Mitte der weiteren Reflexsensoren (17, 18) gleich dem Abstand der Cassettenschmalseite vom Etikettenrand ist
- eine Einrichtung zum kurzzeitigen Aktivieren der weiteren Reflexsensoren (17, 18) durch den ersten Durchlichtsensor (14) in der Position der Cassette beim Durchschreiten des ersten Durchlichtsensors (14) sowie zum Aktivieren der ersten Reflexsensoren (15, 16) bis zum Durchschreiten der Cassette des zweiten Durchlichtsensors (19) sowie zum abermaligen kurzzeitigen Aktivieren der weiteren Reflexsensoren (17, 18) durch den zweiten Durchlichtsensor (19) in der Position beim Durchschreiten des zweiten Durchlichtsensors (19)
- eine Bewertungslogik zur Prüfung der vorgegebenen Lichtmenge für jeden Reflexsensor
- eine Auswertelogik zum Sortieren der Cassetten nach Verlassen der Prüfvorrichtung

## Claims

1. An automatic apparatus for checking for the correct position of the labels and for the presence of the tape roll during assembly of magnetic tape cassettes, consisting of an upper cassette part, a lower cassette part and a magnetic tape capable of being wound and unwound from one hub to the other in the interior space, the roll being observable through the transparent window provided in the upper and lower cassette parts, the cassettes containing a field for receiving a label on at least one of their outer surfaces and the test apparatus containing photosensors, all of which are operated with pulsed infrared light, which comprises
- a transmitted-light sensor (1) in a first position for stopping and fixing the magnetic tape cassette (2) arriving from the assembly zone, in the test apparatus (3),
- at least two reflective sensors (10, 10', 10'', 10''') which are arranged opposite each cassette side provided with a label and consist of an optical waveguide having two parallel narrow slits (9, 11) which are aligned parallel to at least one label edge for optical checking of the position of the label (12) with simultaneous checking for the presence of the tape roll (7) by transmitted-light measurement (5, 6),
- a rating logic unit for checking the predetermined quantity of light for each sensor and for subsequently transporting the cassette to a second position,
- two cylinders (12, 13) which can be operated by the rating logic unit and now present in the second position of the cassette (2), for transporting the latter to a third position at right angles to the previous running direction when both cylinders are operated and to a fourth position in the running direction of the cassette when both cylinders are not operated, and
- a detector means (14) in the second position for transporting a subsequent cassette from the first to the second position as soon as the first cassette has left the second position.

2. Apparatus as claimed in claim 1, wherein one of the photosensors (10) can be aligned parallel to one of the edges of the label (12), and the other sensor (10') can be aligned parallel to an edge at right angles thereto.

3. Automatic apparatus for checking for the correct position of the labels during the assembly of magnetic tape cassettes consisting of an upper cassette part and a lower cassette part, the cassettes containing a field for receiving a label on at least one of their outer surfaces, the test apparatus containing photosensors, all of which are operated with pulsed infrared light, and the cassette being capable of being transported continuously on a conveyor belt through the test apparatus, which comprises
- a first (14) and a second (19) transmitted-light sensor whose horizontal distance is equal to the length of the label (12), for scanning a narrow side of the cassette (2),
- four reflective sensors (15, 16, 17, 18) arranged at the height of the label field, of which two first reflective sensors (15, 16) are arranged vertically one on top of the other roughly at a distance corresponding to the label height, just outside the label field, and two further reflective sensors (17, 18) are arranged between the first reflective sensors (15, 16) a small horizontal distance apart, the horizontal distance of the first transmittedlight sensor (14) from the geometric center of the further reflective sensors (17, 18) being equal to the distance of the narrow side of the cassette from the label edge,
- a means for brief activation of the further reflective sensors (17, 18) by the first transmitted-light sensor (14) in the position of the cassette when it passes through the first transmitted-light sensor (14) and for activating the first reflective sensors (15, 16) until the cassette passes through the second transmitted-light sensor (19) and for once again briefly activating the further reflective sensors (17, 18) by the second transmitted-light sensor (19) in the position on passing through the second transmitted-light sensor (19),
- a rating logic unit for checking the predetermined quantity of light for each reflective sensor and
- an evaluating logic unit for sorting the cassettes after leaving the test apparatus.

## Revendications

1. Dispositif à fonctionnement automatique, pour le contrôle de la position correcte des étiquettes et de la présence de l'enroulement de bande lors du montage de cassettes à bande magnétique, composées d'une partie supérieure et d'une partie inférieure de cassette, d'une bande magnétique susceptible d'être enroulée et déroulée, d'un moyeu de bobinage à l'autre, dans l'espace intérieur, l'enroulement pouvant être observé à travers une fenêtre, prévue dans les partie supérieure et inférieure de cassette, les cassettes contenant sur au moins l'une de leurs faces extérieures un emplacement pour recevoir une étiquette et le dispositif de contrôle contenant des phonocapteurs, fonctionnant tous avec une lumière infrarouge pulsée, caractérisé par :
- un capteur de lumière traversante (1), dans une première position, pour immobiliser et fixer la cassette à bande magnétique (2) provenant de la chaîne de montage dans le dispositif de contrôle (3),
- au moins deux capteurs à réflexion (10,10',10'',10,'''), disposés en face de la face de cassette pourvue d'une étiquette, composés d'un guide de lumière à deux interstices étroits (9,11) parallèles, orientés parallèlement à au moins un côté d'étiquette et destinés à assurer un contrôle optique de la position de l'étiquette (12) , tout en opérant simultanément un contrôle par mesure de la lumière traversante (5,6), pour confirmer la présence de l'enroulement de bande (7),
- une logique de pondération, pour contrôler la quantité de lumière prédéterminée pour chaque capteur et assurer ensuite le transport de la cassette en une deuxième position,
- deux vérins (12,13), susceptibles d'être actionnés par la logique de pondération, dans la deuxième position de la cassette (2) , en vue de son transport, perpendiculairement à la direction de défilement précédente et, en cas de non actionnement des deux vérins, en une quatrième position dans la direction de défilement de la cassette,
- un dispositif détecteur (14), dans le deuxième position, pour assurer le transport d'une cassette venant ensuite, depuis la première position à la deuxième position, dès que la première cassette a quitté la deuxième position.

2. Dispositif selon la revendication 1, caractérisé en ce que l'un des phonocapteurs (10) peut être orienté parallèlement à l'un des côtés de l'étiquette (12) et en ce que l'autre capteur (10') peut être orienté parallèlement à un côté lui étant perpendiculaire.

3. Dispositif à fonctionnement automatique, pour le contrôle de la position correcte des étiquettes lors du montage de cassettes à bande magnétique, composées d'une partie supérieure et d'une partie inférieure de cassette, les cassettes contenant sur au moins l'une de leurs faces extérieures un emplacement pour recevoir une étiquette et le dispositif de contrôle contenant des phonocapteurs, fonctionnant tous avec une lumière infrarouge pulsée, les cassettes étant susceptibles d'être transportées de façon continue sur une bande de défilement, au moyen du dispositif de contrôle, caractérisé par :
- un premier (14) ainsi qu'un deuxième (19) capteur de lumière traversante, dont l'espacement horizontal est égal à la longueur de l'étiquette (12) et destiné à explorer un côté étroit de la cassette (2)
- quatre capteurs à réflexion (15,46,47,48), disposés au niveau de l'emplacement à étiquettes, dont deux premiers capteurs à réflexion (15,16) sont disposés verticalement l'un au-dessus de l'autre, à peu près espacés de la valeur de la hauteur de l'étiquette, juste à l'extérieur de l'emplacement à étiquette, et deux autres capteurs à réflexion (17,18), entre les premiers capteurs à réflexion (15,16), à une faible distance horizontale l'un de l'autre, l'espacement horizontal entre le capteur à lumière traversante (14) et le centre géométrique des autres capteurs à réflexion (17,18) étant égal à l'espacement entre le côté étroit de cassette et la bordure de l'étiquette,
- un dispositif destiné à opérer une brève activation des autres capteurs à réflexion (17,18), au moyen du premier capteur à lumière traversante (14), dans la position de la cassette, lors du passage du premier capteur à lumière traversante (14), ainsi que l'activation des premiers capteurs à réflexion (15,16), jusqu'au passage de la cassette sur le deuxième capteur à lumière traversante (19), ainsi qu'une brève activation réitérée des autres capteurs à réflexion (17,18), au moyen du deuxième capteur à lumière traversante (19), dans la position qui est celle lors du passage du capteur à lumière traversante (19),
- une logique de pondération pour contrôler la quantité de lumière prédéterminée pour chaque capteur à réflexion,
- une logique de sélection, pour trier les cassettes, après qu'elles ont quitté le dispositif de contrôle.
